# EUROPEAN PATENT APPLICATION

(11) **EP 0 888 820 A2**
(43) Date of publication of application: **07.01.1999**
(21) Application number: 98112014.0
(22) Date of filing: 30.06.1998
(51) Int. Cl.: B05B 9/08, A23P 1/08

(54) **Spraying device, particularly for food products**

(30) Priority: 04.07.1997 IT MI971588
(71) Applicant: Moltrasi, Roberto, 21052 Busto Arsizio (Varese) (IT); Anzio, Massimo, 21052 Busto Arsizio (Varese) (IT); Anzio, Francesco, 21052 Busto Arsizio (Varese) (IT); Anzio, Alessandro, 21017 Samarate (Varese) (IT)
(72) Inventor: Moltrasi, Roberto, 21052 Busto Arsizio (Varese) (IT); Anzio, Massimo, 21052 Busto Arsizio (Varese) (IT); Anzio, Francesco, 21052 Busto Arsizio (Varese) (IT); Anzio, Alessandro, 21017 Samarate (Varese) (IT)
(74) Representative: Rapisardi, Mariacristina

(57) **Abstract**

A spraying device for food products includes a container (2) for a food product, a closure member (4) for sealingly closing the container, an electrical resistance (8) for heating the container and a duct (5) for transferring the food product to a dispensing gun (6) for dispensing the food product on a base food product.

## Description

The present invention relates to a spraying device, particularly for food products.

It is currently known to spread a food product, such as jelly, on another food product, manually using a brush and container.

Instead of the manual operation, apparatus are know constituted by a water tank and a large container containing the product to be transformed into jelly.

After heating the water in the tank to a preset value, the product to be transformed into jelly is passed through a coil immersed into the hot water in order to heat the product to the desired temperature and to successively dispense it by means of a dispensing gun.

The operation is allowed by the pressure increase inside the product container obtained by means of a compressor.

These apparatuses, however, show several inconveniences. Among the inconveniences, they are not very practical in use and are expensive to buy and to operate.

These machines are in fact very bulky and heavy and are difficult to move around without a trolley which further increases their bulk, thus occupying space that could be used in other ways.

Furthermore, in order to dispense the jelly, the great amount of water inside the tank has to be heated constantly, with consequent long times of start up of the machine and great energy consumption.

If the machine is used occasionally, the water has to be reheated again each time to the desired temperature.

Because of their particular construction, these machine can only be fed with liquid jelly and not with solid jelly.

It is also apparent that the construction of these machine is complex and requires expensive apparatuses such as the compressor, the coil and others, thus making this type of machine expensive and not economical for small production such as in small pastry shops or similar.

The aim of the present invention is to eliminate the inconveniences of the cited prior art.

An object of the present invention is to provide a food spraying device having a substantially reduced size, and therefore easily handled, for use in dispensing either large or small quantities of liquid or solid product.

A further object of the invention is to provide a spraying device which can be used in small and large shops and which occupies a small space.

Still a further object of the invention is to provide a spraying device having a simple structure and which can be manufactured economically, still providing a high operation quality.

Still a further object of the invention is to provide a spraying device which can be readied for use in a very short time and which is reliable in use unlike the prior art machines that are for example easily clogged by the jelly when they are not used for some time.

The above aim and objects, as well as others, are achieved by a spraying device, particularly for food products, characterized in that it comprises a container for a food product, closure means for sealingly closing said container, heating means for heating said container and transfer means for transferring said food product to a dispensing means for dispensing said food product on a base food product.

Further characteristics and advantages of the invention will be more apparent by the following description of an embodiment of the invention, illustrated, by way of example in the enclosed drawings wherein:

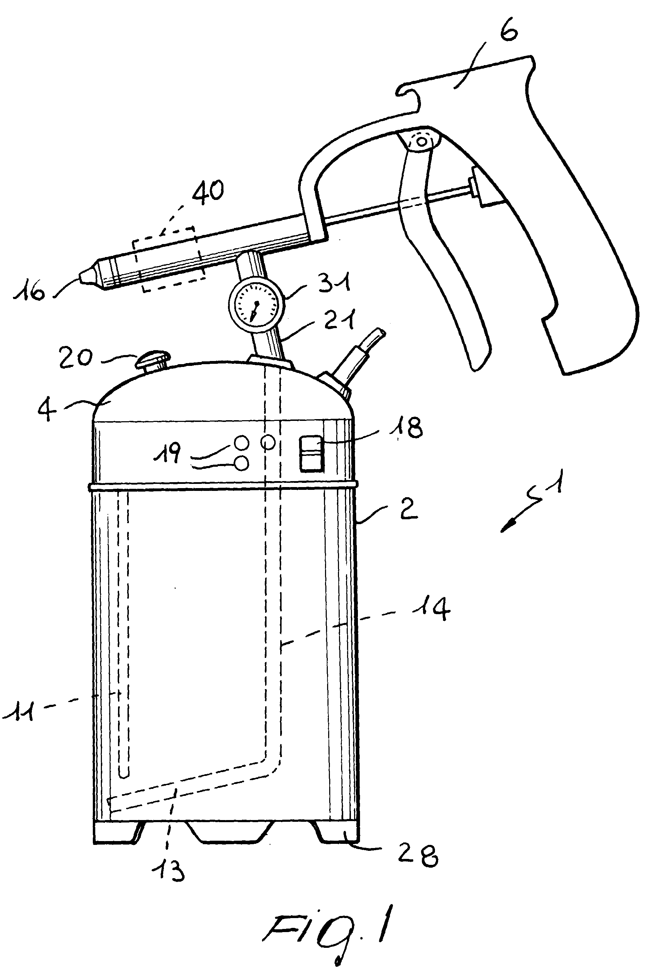

Fig. 1 is a side view of the device according to the present invention; and

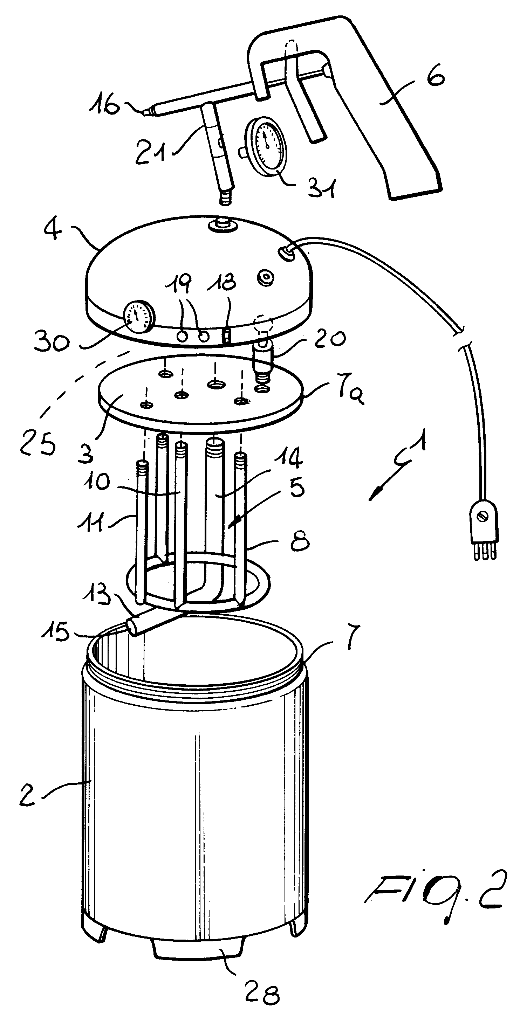

Fig. 2 is a perspective exploded view of the device according to the invention.

With reference to the drawings, the spraying device, particularly for food products, according to the present invention, generally designated by the reference numeral 1, comprises a container 2 for containing a food product which, in the present example, is either solid or liquid jelly.

A sealing closure means is provided on the container and is formed by a plate member 3 having a cover 4 connected thereto on the opposite side of the container 2.

In particular, plate member 3 may have an engagement means adapted to engage a corresponding means, constituted by a hook or bayonet mount or, as in the illustrated example, by a thread 7a engaging a counter-thread 7 provided on the external edge of container 2.

Thread 7a and counter-thread 7 are different and are constructed so as to allow, will unscrewing the cover 4 from the container 2, to progressively lower the pressure inside the device before opening it, so as to ensure the safety of the user.

The heating means comprises an electrical resistance 8 adapted to heat the product contained in the container as uniformly an homogeneously as possible.

For this reason the electrical resistance 8 is shaped as a basket, to match the internal shape of the container 2, and has a first thermostat probe 10, operatively connected to the resistance, and adapted to gage its temperature and accordingly to maintain or interrupt the power to the resistance. Obviously, the resistance may also be formed as a coil or spiral.

Probe 10 will interrupt the power to the electrical resistance at a selected temperature and can be reset manually or automatically.

This prevents the food product remains from spoiling the surface of the resistance causing the consequent inconveniences.

The device is also provided of a second probe 11, also provided with a thermostat, and adapted to gage the actual temperature of the product inside the container in order to establish if the product has reached the optimal temperature for being effectively sprayed, by means of the dispensing gun 6, on the base product, which is not illustrated in the drawings.

Conveniently, resistance 8, as well as the first and second probes 10 and 11, are connected to, and supported by, plate member 3 which also supports the transfer means 5. Transfer means 5 comprises a duct having an end portion 13 bent with respect to a linear portion 14 and extends substantially at right angles with plate member 3.

In particular, end portion 13 has an inlet 15 directed according to the direction of a nozzle 16 of the dispensing gun 6. In this manner, even if the device is inclined, while for example spraying the product on the base product, the product inside the container will always be drawn by duct 5 even when in low quantities.

In the same manner, probe 11 may be conveniently arranged in the region at the inlet 15, or at a distance from inlet 15, in order to allow to measure the temperature of the product even at a low level.

Conveniently, cover 4 and plate member 3 also form an interspace 25 accommodating all the electrical connections for the operation of probes 10 and 11 and of resistance 8 and of the operational members such as an on-off switch 18 and one or more warning lights 19 on the operation of the device.

According to a variated aspect of the invention, all the component parts, or just a portion of the component parts, contained in the interspace 25 may be accommodated in a control box, not illustrated, arranged outside the container and the cover.

A self-cleaning safety valve 20 is arranged on the plate member 3 and is adapted to activated in case the pressure inside container 3 reaches a dangerous limit, or may be manually activated for relieving the pressure before opening the container.

The dispensing gun 6 is rigidly associated with container 3 and with duct 5 and is provided with a pressure gage 31 arranged on its manifold 21. Pressure gage 31 shows the pressure inside the container to the user, during the operation of resistance 8.

Manifold 21 forms an angle smaller than 90° with respect of plate member 3 on the side facing nozzle 16.

Furthermore, manifold 21 is associated with plate member 3 at a peripheral region thereof for an optimal balance of the device during the spraying operation and for allowing the product to gather in the drawing region inside the container.

Conveniently, the pressure inside the container 3 is automatically generated by heating the product which, as mentioned, may be a solid or liquid jelly heated at 90-95°C and thus producing steam and therefore a pressure sufficient to spray the product by activating the dispensing gun.

If other products have to be sprayed, requiring a relatively low heating temperature and therefore not sufficient to generate the necessary pressure inside the container 2, the device according to the present invention is provided with a connection with a compressor (which is not illustrated in the drawings) which can be connected to either the container or the gun.

The device is totally made of non toxic material and has high hygienic properties because it can be disassembled completely for cleaning it even in the remotest recesses.

Furthermore, the container 2 is insulated to prevent the user from getting burned even if he or she touches the container while the resistance 8 is operating. This same function is performed by the interspace 25 which prevents heat from propagating to the surface of cover 4 so that the cover does not heat up during the operation of the device.

Advantageously, the dispensing gun 6 may be provided with a supplementary resistance 40 at the nozzle 16. Supplementary resistance 40 is adapted to melt the food product which may have solidified after a certain time of non use of the device. Supplementary resistance 40 is activated at the start up of resistance 8 or independently.

The container is also provided with support members 28 ensuring its stability and preventing heat from propagating to the floor or support on which the container is placed and to prevent the container from tipping in case the bottom of the container is deformed by heat or high pressure.

The operation of the device according to the invention is apparent from the above description.

It is noted that either solid or liquid jelly may be introduced in the container. After closing the container by means of the plate member and cover it is possible to turn on the resistance 8 which heats the product inside the container to a selected temperature by means of the first and second probes and possibly of an adjustable thermostat 30 manually operated by the user.

As the product heats up inside the container 2 a pressure generates inside the container and is regulated by means of pressure gage 31.

By activating the dispensing gun 6, the pressure allows to spray the heated product through the spraying nozzle 16 and duct 5. It is also possible to adjust the spraying pressure by means of an adjusting member acting on the time of power on the resistance and therefore on the temperature of the product.

It has been seen in practice that the device according to the invention is particularly convenient allowing to spray jelly without the need of a compressor or the need to heat a large quantity of water, and therefore without complex and expensive accessories such as coils and similar.

Furthermore, the operation of the device is extremely versatile and easy, owing to its compact structure.

The device according to the invention may have numerous modifications and variations, all within the inventive concept; furthermore, all the details may be substituted with technically equivalent elements.

For example, the resistance may be provided directly in the body of the container or on its bottom or sides.

The materials employed, as well as the dimensions, may be any according to the specific needs and the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Spraying device, particularly for food products, characterized in that it comprises a container 2 for a food product, closure means 3,4 for sealingly closing said container, heating means 8 for heating said container and transfer means 5 for transferring said food product to a dispensing means 6 for dispensing said food product on a base food product.

2. Device, according to claim 1, characterized in that said dispensing means comprises a dispensing gun 6 associated with said container 2.

3. Device, according to claim 1 or 2, characterized in that said transfer means comprises at least one duct 5 having an end portion 13 bent and presenting its inlet 15 directed according to the direction of a nozzle 16 of said dispensing gun 6.

4. Device, according to one or more of the preceding claims, characterized in that said duct 5 extends substantially in a peripheral region of said container and has an end portion 13 bent according to the direction of said nozzle 16 of said dispensing gun 6.

5. Device, according to one or more of the preceding claims, characterized in that said heating means comprises at least one electrical resistance 8 adapted to heat said product contained in said container 2.

6. Device, according to one or more of the preceding claims, characterized in that it comprises at least one first probe 10 adapted to gage the temperature of said resistance 8.

7. Device, according to one or more of the preceding claims, characterized in that it comprises at least one second probe 11 adapted to gage the temperature of said product.

8. Device, according to one or more of the preceding claims, characterized in that said closure means comprises a plate member 3 having an engagement means 7a for engaging a corresponding means 7b provided on said container.

9. Device, according to one or more of the preceding claims, characterized in that said plate member 3 supports said resistance 8, said duct 5 and said first 10 and second 11 probes, and has a cover 4 on the opposite side with respect to said container.

10. Device, according to one or more of the preceding claims, characterized in that said second probe 11 is arranged on said plate member 3 in a region proximate to the drawing area of said inlet 15 of said bent portion 13 of said duct 5.

11. Device, according to one or more of the preceding claims, characterized in that said gun 6 is connected to said duct 5 through a manifold 21, said manifold forming an angle smaller than 90° with respect of said plate member 3 on the side facing said nozzle 16.

12. Device, according to one or more of the preceding claims, characterized in that said manifold 21 is associated with said plate member at a peripheral region thereof.

13. Device, according to one or more of the preceding claims, characterized in that it comprises an adjustable thermostat 30 for varying the temperature of said resistance 8.

14. Device, according to one or more of the preceding claims, characterized in that it comprises at least one pressure gage 31 for measuring the pressure inside said container.

15. Device, according to one or more of the preceding claims, characterized in that said cover 4 and said plate member 3 form an interspace 25 accommodating the electrical connections of said probes and resistance.

16. Device, according to one or more of the preceding claims, characterized in that the layout of said resistance 8 substantially matches the internal shape of said container 2.

17. Device, according to one or more of the preceding claims, characterized in that it comprises at least one safety valve 20 and a connector for connecting said container and/or gun to a compressor.

18. Device, according to one or more of the preceding claims, characterized in that said container is insulated and is provided with support members 28 for its stability.

19. Device, according to one or more of the preceding claims, characterized in that said gun 6 has an additional electrical resistance 40 provided at a region proximate to said nozzle 16.

20. A method for spraying food products characterized in that it comprises heating a food product in a pressure container to a preset temperature suitable to create a pressure inside said container, said pressure being sufficient to allow said heated food product to exit said container on activation of a dispensing gun.
